# EUROPEAN PATENT APPLICATION

(11) **EP 2 287 769 A1**
(43) Date of publication of application: **23.02.2011**
(21) Application number: 10173269.1
(22) Date of filing: 18.08.2010
(51) Int. Cl.: G06F 21/00

(54) **System and method for DRM content management**

(30) Priority: 18.08.2009 KR 20090076439
(71) Applicant: Samsung Electronics Co., Ltd., Suwon-si, Gyeonggi-do 442-742 (KR)
(72) Inventor: Im, Kwan-Hyuk, Gyeonggi-do 442-742 (KR); Han, Kyu-Hui, Gyeonggi-do 442-742 (KR)
(74) Representative: Jenkins, Richard Gavin

(57) **Abstract**

A system for managing a Digital Rights Management (DRM) content includes a content providing server for providing an environment, through which a DRM content and a digital right of the DRM content can be registered, a service providing server for issuing a license serving as a usage authority for each of DRM content files provided from the content providing server, generating a license revocation execution value in a specific field of the issued license, encrypting the generated license revocation execution value for transmission to a user terminal, and the user terminal for inspecting the license of the DRM content file transmitted from the service providing server, and extracting and storing the license and the license revocation execution value to use a corresponding DRM content file according to the license, and upon receiving a revocation request, transmitting a revocation result of the corresponding license to the service providing server.

## Description

### BACKGROUND OF THE INVENTION

### 1. Field of the Invention

The present invention relates to a system and a method for Digital Rights Management (DRM). More particularly, the present invention relates to a DRM system and a DRM method for providing service to a reliable user through authentication, so that it is possible to more safely protect the rights of a provider and a user of DRM contents.

### 2. Description of the Related Art

Digital Rights Management (hereinafter referred to as "DRM") technology refers to technology for managing and protecting intellectual property rights of digital content using an encryption scheme. That is, the DRM technology is used for securely providing a user with various contents from a Content Provider (CP) and preventing unauthorized usage and distribution of the contents. Such DRM technology can protect information through generation, distribution, and usage until abandonment of the digital contents. It also protects the usage and right according to the user's authority in an office as well as on online environment..

In order to use the contents applied with the DRM technology in a portable terminal, first, the user of a portable terminal must access the content, then a server provides the corresponding DRM content and download the DRM content, meta data corresponding to the DRM content, and a license. Here, the license includes information indicating the usage authority of the contents (e.g. the allowed number of usage s and term).

When the DRM content and the license are all stored in the portable terminal through the above process, the user can use the DRM content.

Currently, the DRM system prevents illegal copying of the contents distributed through a reliable network and controls the legal usage of the contents, while maintaining confidentiality using the license.

However, in spite of the DRM content management through issuance of the license, a digital certificate for certifying a qualification of a user in various transactions performed on the web includes a routine for managing the digital certificate such that the digital certificate can be revoked and cannot be used any more when a particular even occurs during the use of the digital certificate.

Contrary to the digital certificate, the license issued for the DRM content does not include such a mechanism. Therefore, when a contract for the digital rights between the DRM content provider and the DRM content service provider is terminated so that the corresponding DRM content cannot be provided any more, the previously issued license does not include means for retrieving the usage authority. As a result, a lot of users may maliciously use unauthorized rights. Further, when the problems, such as the service subscription is cancelled or the corresponding contents are abnormally terminated, occur, the license issued for the DRM content does not include the routine of retrieving the usage authority of the corresponding license. Thus, it is impossible to take the necessary measures, such as refund and usage terms extension, for a contents buyer.

### SUMMARY OF THE INVENTION

Accordingly, the present invention has been made to solve the above-stated problems occurring in the prior art and provides additional advantages, by providing a DRM system and a DRM method, which can retrieve a pre-issued and usage-authority expired license. This is achieved by providing an encrypted/decrypted key generated through a combination of keys included in a corresponding license of a DRM content in a system supporting a DRM content service to a reliable user through authentication, so that it is possible to safely protect the rights of a provider and a user of DRM contents.

In accordance with an aspect of the present invention, a system for managing a Digital Rights Management (DRM) content includes: a content providing server for providing an environment, through which a DRM content and a digital right of the DRM content can be registered; a service providing server for issuing a license serving as a usage authority for each of DRM content files provided from the content providing server, generating a license revocation execution value in a specific field of the issued license, encrypting the generated license revocation value, and transmitting the encrypted license revocation value to a user terminal; and the user terminal for inspecting the license of the DRM content file transmitted from the service providing server, and extracting and storing the license and the license revocation execution value to use a corresponding DRM content file according to the license, and transmitting a revocation result of the corresponding license to the service providing server.

In accordance with another aspect of the present invention, a method for managing a DRM content includes: registering a DRM content and a digital right of the DRM content; issuing a license serving as a usage authority for each of DRM content files, generating a license revocation execution value in a specific field of the issued license, encrypting the generated license revocation execution value, and transmitting the encrypted license revocation execution value; inspecting a transmitted DRM content file, and extracting and storing the license and the encrypted license revocation execution value; when the usage authority of the DRM content file has expired, generating and transmitting a license revocation request list, in which a license ID of corresponding DRM content file is matched with a license revocation execution code value; and decrypting the encrypted license revocation execution value of the corresponding DRM content file by using the revocation code value obtained through the received license revocation request list, and transmitting a revocation execution code key value serving as decryption result information.

### BRIEF DESCRIPTION OF THE DRAWINGS

The above and other aspects, features and advantages of the present invention will be more apparent from the following detailed description taken in conjunction with the accompanying drawings, in which:
FIG. 1 is a diagram schematically illustrating the general construction of a DRM content management system according to the present invention;
FIG. 2 is a signal flowchart illustrating a signal flow between the elements of a DRM content management system according to a first embodiment of the present invention;
FIG. 3 is a signal flowchart illustrating a signal flow between the elements of a DRM content management system according to a second embodiment of the present invention; and
FIG. 4 is a flowchart illustrating a DRM content management method according to the present invention.

### DETAILED DESCRIPTION OF THE INVENTION

Hereinafter, preferred embodiments of the present invention will be described with reference to the accompanying drawings. In the following description, the same elements will be designated by the same reference numerals although they are shown in different drawings. Further, various specific definitions found in the following description are provided only to help general understanding of the present invention, and it will be understood by those skilled in the art that various changes in form and details may be made therein without departing from the spirit and scope of the invention.

While the present invention is described hereinafter with particular reference a user terminal capable of reproducing the DRM content, it is to be understood at the outset of the description which follows, it is contemplated that the apparatus and methods in accordance with the present invention may be used with terminals capable of downloading a license from a service providing server, and preferably to a mobile communication terminal, and other terminals including every information and communication device and multimedia device known to those skilled in this art, such as a digital broadcasting terminal, a PDA (Personal Digital Assistant), a smart phone, a 3G terminal including IMT-2000 (International Mobile Telecommunication 2000) terminal, a WCDMA (Wideband Code Division Multiple Access) terminal, a GSM/GPRS (Global System for mobile Communication Packet Radio Service) terminal, a UMTS (Universal Mobile Telecommunication Service) terminal.

Further, in the specification, the case where the digital right of the DRM content to be described is terminated refers to a case, in which, for example, the digital right contract between a content providing server and a service providing server is terminated so that the service providing server cannot provide the user with corresponding DRM content any more, a certificate of a user terminal capable of executing corresponding DRM content is expired, a service subscription of the user is cancelled, or the DRM content are determined to have a problem, such as during the operation of an executable application program, e.g. Java contents, a code that is maliciously added to corresponding contents during the reproduction of the DRM content after the issuance is hidden so that the DRM content are abnormally terminated.

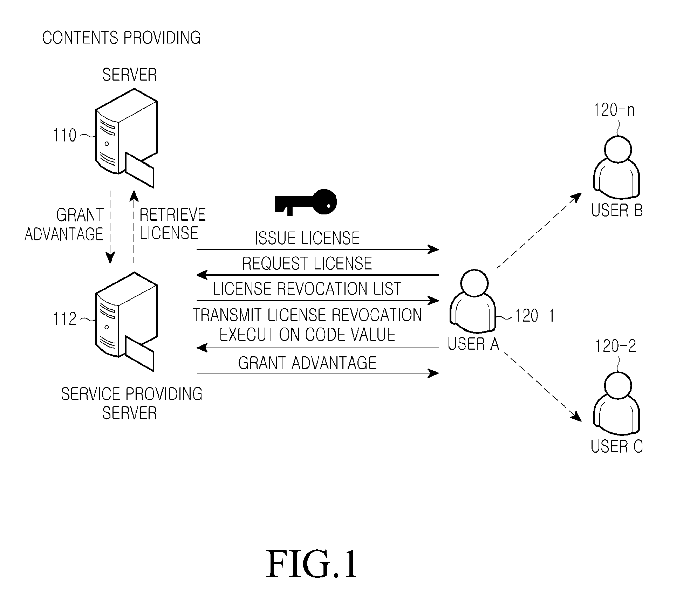

FIG. 1 is a diagram schematically illustrating the general construction of a DRM content management system according to the present invention. Referring to FIG. 1, a brief explanation of overall operation of the DRM content management system according to the embodiment of the present invention will be discussed, and a detail operation steps will be described later.

As shown in FIG. 1, the construction of the DRM content management system of the present invention includes a content providing server 110, a service providing server 112, and multiple user terminals 120-1, 120-2, ... , and 120-n. The content providing server 110 provides an environment through which a DRM content and a digital right of the DRM content can be registered. The service providing server 112 issues a license serving as a usage authority for each of DRM content files provided from the content providing server 110, generates a revocation execution value necessary for the revocation of the license in a specific field of the issued license, and encrypts the generated revocation execution value, to transmit the encrypted revocation execution value to the multiple user terminals 120-1, 120-2, ... , and 120-n.

Further, when the service providing server 112 receives a digital right expiration notifying message for the specific DRM content from the content providing server 110, the service providing server 112 matches a license ID for each of the DRM content files corresponding to the expired digital right with a revocation execution code key value for decrypting the revocation execution value generated and encrypted during the issuance of the license, registers the matched license ID and revocation execution code key value in a license revocation list, transmits the license revocation list to a corresponding user terminal that has received the DRM content file having the expired digital right, and notifies the user terminal so as to revoke the issued license of the corresponding DRM content file.

The multiple user terminals 120-1, 120-2, ... , and 120-n inspect a DRM content file transmitted from the service providing server 112, extract and store a license and a license revocation execution value, and then use the corresponding DRM content file according to the license. Further, when the multiple user terminals 120-1, 120-2, ... , and 120-n receive a license revocation request list from the service providing server 112, the multiple user terminals 120-1, 120-2, ... , and 120-n identify a license ID from the received license revocation request list and transmit a corresponding license revocation state of a DRM content file corresponding to the identified license ID to the service providing server 112. In the above description, the construction of the DRM content management system according to the embodiment of the present invention has been schematically described. Hereinafter, a DRM content management method according to various embodiments of the present invention will be described in detail.

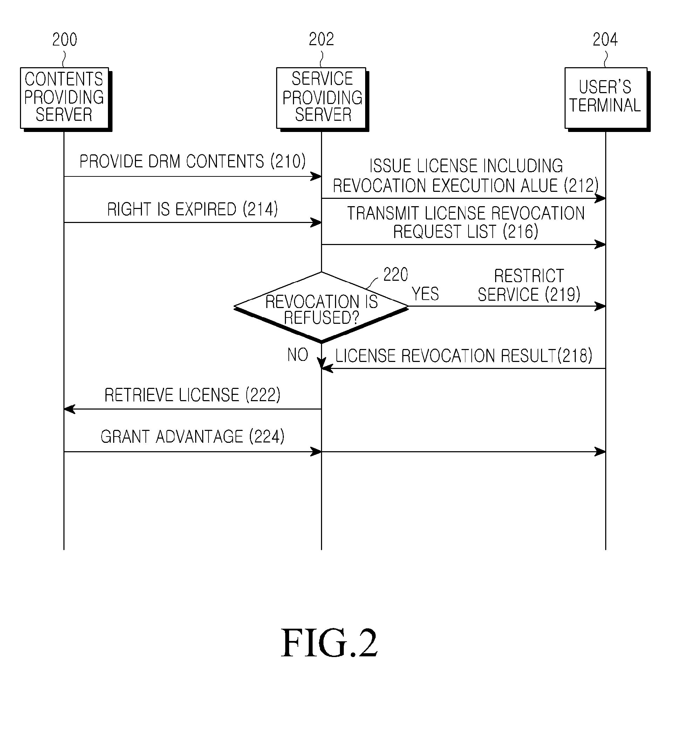

FIG. 2 is a signal flowchart illustrating a signal flow for the operation of the DRM content management system according to a first embodiment of the present invention.

In the following description, it is presumed that a channel is established so as to share a license between the elements of the DRM content management system. Further, the operation to be described with reference to FIG. 2 illustrates an example in which the service providing server actively requests the deletion of a license according to the embodiment of the present invention.

Referring to FIG. 2, according to the signal flow between the elements of the DRM content management system of the present invention, first, the content providing server 200 providing an environment, through which a DRM content and a digital right of the DRM content can be registered, supply the service providing server 202 with the DRM content in step 210.

The service providing server 202 issues a license including a license revocation execution value for each of the DRM content files provided from the content providing server 200 and transmits the issued license to the user terminal 204 in step 212.

More specifically, the service providing server 202 issues a license serving as a usage authority for each of the DRM content files provided from the content providing server 200, generates a revocation execution value of the corresponding license in a specific field of the issued license and encrypts the generated revocation execution value.

At this time, the encryption of the license revocation execution value of the DRM content file that is, it refers to generating of a value to be used during the revocation of the license in a corresponding area among entire sections of a specific DRM content file and encryption of the generated value. That is, the encrypted value can represents a unique identification code of a corresponding license.

As described above, when the service providing server 202 purchases DRM content file instead of the user terminal 204, the service providing server 202 generates and encrypts a license revocation execution value according to the set encryption condition and issues a license including the encrypted license revocation value.

The license clearly indicates a corresponding license identifier (ID), the digital right for the use of the corresponding DRM content file, a contract condition, a valid usage term, etc.

The user terminal 204 receiving the DRM content file and the license from the service providing server 202 inspects a specific field, i.e. a header area, of the received license, extracts the license and the license revocation execution value included in the header area, and stores the extracted license and license revocation execution value in a memory. Then, the user terminal 204 uses the corresponding DRM content file according to information indicated in the license.

Thereafter, when the digital right for the specific DRM content file has expired, the content providing server 200 notifies the service providing server 202 of the digital right expiration in step 214. Then, in step 216, the service providing server 202 matches the license ID for each of the DRM content files corresponding to the expired digital right with a revocation execution code key value for decrypting the revocation execution value generated and encrypted during the issuance of the license, registers the matched licensed ID and revocation execution code key value in the license revocation list, and then transmits the license revocation list to the corresponding user terminal having received the right-expired DRM content file

The service providing server 202 checks and recognizes if the user terminal 204 accepts or refuses the license revocation of the corresponding DRM content file via a feedback from the user terminal 204 with respect to the transmitted revocation request list in step 220.

In case where the user terminal 204 has refused the license revocation of the corresponding DRM content file, it signifies that after transmission of the license revocation request list, the service providing server 202 has received no feedback from the user terminal 204 within a predetermined time period. This means that the corresponding user terminal 204 did not decrypt the encrypted license revocation execution value. As a result, the service providing server 202 restricts the service of the DRM content file in step 219.

Meanwhile, when the user terminal 204 has accepted the license revocation of the corresponding DRM content file, the user terminal 204 transmits a license revocation result of the corresponding DRM content file to the service providing server 202 in step 218.

Specifically, when the user terminal 204 receives the license revocation request list from the service providing server 202, the user terminal 204 compares the license ID registered in the license revocation request list with a license ID stored in the memory. As a result of the comparison, when the license ID registered in the license revocation request list is included in the memory, the user terminal 204 extracts a license revocation execution value of the corresponding DRM content file stored in the memory, decrypts the extracted license revocation execution value by using the revocation execution code key value registered in the license revocation request list, and transmits the revocation execution code value serving as decryption result information to the service providing server 202, together with the corresponding license ID.

Further, when a specific license ID included in the revocation request list is not included in the user terminal 204, the user terminal 204 notifies that the specific license ID is not included in the server.

In step 222, the service providing server 202 recognizes that the license has been revoked through the license ID and the revocation execution code value of the license ID transmitted from the user terminal 204 and transmits the revocation recognition to the content providing server 200, to notify that the license of the corresponding DRM content file is retrieved.

Then, in step 224, the content providing server 200 grants advantage, such as recall, refund, or usage term extension, for the retrieved license. At this time, when the content providing server 200 receives a notification notifying that the revocation code value of the specific license ID is not included as a response to the revocation request, this case signifies that the license has already expired, so that the content providing server 200 is not required to separately refund and grant other advantages.

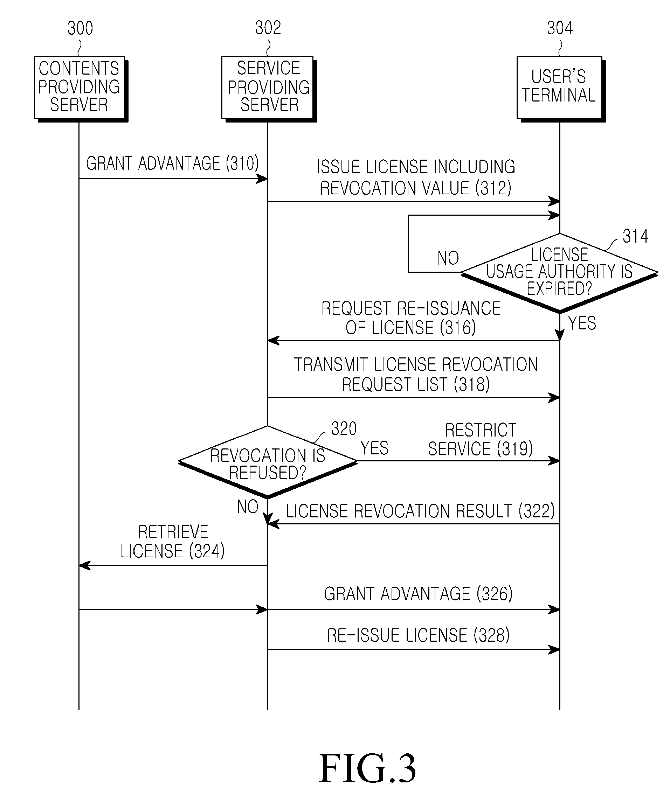

Next, FIG. 3 is a signal flowchart illustrating the signal flow for the operation of the DRM content management system according to a second embodiment of the present invention.

Further, the operation to be described with reference to FIG. 3 according to another embodiment of the present invention illustrates an example, in which when the service providing server 300 directly receives a request of re-issuance of the license of the DRM content file from the user terminal 304, a new license is issued after the revocation of a previously issued license has been confirmed.

Referring to FIG. 3, according to the signal flow between the elements of the DRM content management system of the present invention, the content providing server 300 providing an environment, through which a DRM content and a digital right of the DRM content can be registered, provides the service providing server 302 with the DRM content in step 310.

In step 312, the service providing server 302 issues a license including a license revocation execution value for each of DRM content files provided from the content providing server 300 and transmits the issued license to the user terminal 304.

More specifically, the service providing server 302 issues a license serving as a usage authority for each of the DRM content files provided from the content providing server 300, and generates and encrypts a revocation execution value of the corresponding license in a specific field of the issued license.

At this time, the encryption of the license revocation execution value of the DRM content file is performed according to an encryption condition set in the service providing server 302, that is, it refers to the generation of a value to be used during the revocation of the license in a corresponding area among entire sections of the specific DRM content file and encryption the generated value. That is, the encrypted license revocation execution value can refer to a unique identification code of a corresponding license.

As described above, when the service providing server 302 purchases DRM content file instead of the user terminal 304, the service providing server 302 generates and encrypts a license revocation execution value according to the set encryption condition and issues a license including the encrypted license revocation execution value.

The license clearly indicates a corresponding license identifier (ID), the right for the use of the corresponding DRM content file, a contract condition, a valid usage term, etc.

The user terminal 304 receiving the DRM content file from the service providing server 302 inspects the received DRM content file, extracts the license and the license revocation execution value, stores the extracted license and license revocation execution value in a memory, and then uses the corresponding DRM content file according to information indicated in the license.

At this time, the user terminal 304 periodically checks the license of the corresponding DRM content file that have been currently used in step 314. When the usage authority of the license has expired as a result of the check, the user terminal 304 transmits a license re-issuance request message for the corresponding DRM content file to the service providing server 304 in step 316.

The service providing server 302 receiving the license re-issuance request message from the user terminal 304 generates a revocation request list with respect to the revocation request list in license issued for the corresponding terminal and transmits the generated license revocation list to the corresponding user terminal 304 requesting the license re-issuance in step 318.

The service providing server 302 checks and recognizes if the user terminal 304 has accepted or refused the license revocation of the corresponding DRM content file via a feedback from the user terminal 304 with respect to the transmitted revocation request list in step 320.

If the user terminal 304 has refused the license revocation of the corresponding DRM content file represents the case in which after transmission of the license revocation request list, the service providing server 302 has received no feedback from the user terminal 304 within a predetermined time period or notifies the revocation refusal. Therefore, in this case, the corresponding user terminal 304 does not decrypt the encrypted license revocation execution value to a revocation code value. In this case, the service providing server 302 restricts the partial service of the DRM content file in step 319.

Otherwise, when the user terminal 304 has accepted the license revocation of the corresponding DRM content file, the user terminal 304 transmits a license revocation result of the corresponding DRM content file to the service providing server 302 in step 322.

Specifically, when the user terminal 304 receives the license revocation request list from the service providing server 302, the user terminal 304 compares the license ID registered in the license revocation request list with a license ID stored in the memory. As a result of the comparison, when the license ID registered in the license revocation request list is included in the memory, the user terminal 304 extracts a license revocation execution value of the corresponding DRM content file stored in the memory, decrypts the extracted license revocation execution value by using the revocation execution code key value registered in the license revocation request list, and transmits the revocation code value serving as decryption result information, to the service providing server 302, together with the corresponding license ID.

In step 324, the service providing server 302 recognizes the revocation of the license through the license ID and the revocation code value of the license ID transmitted from the user terminal 302, transmits the recognized revocation to the content providing server 300, and notifies the content providing server 300 that the license of the corresponding DRM content file has been retrieved.

Then, in step 326, the content providing server 300 grants advantage, such as recall, refund, or usage term extension, for the retrieved license. The service providing server 302 re-issues the license for the DRM content file, of which the corresponding license has been retrieved, in step 328.

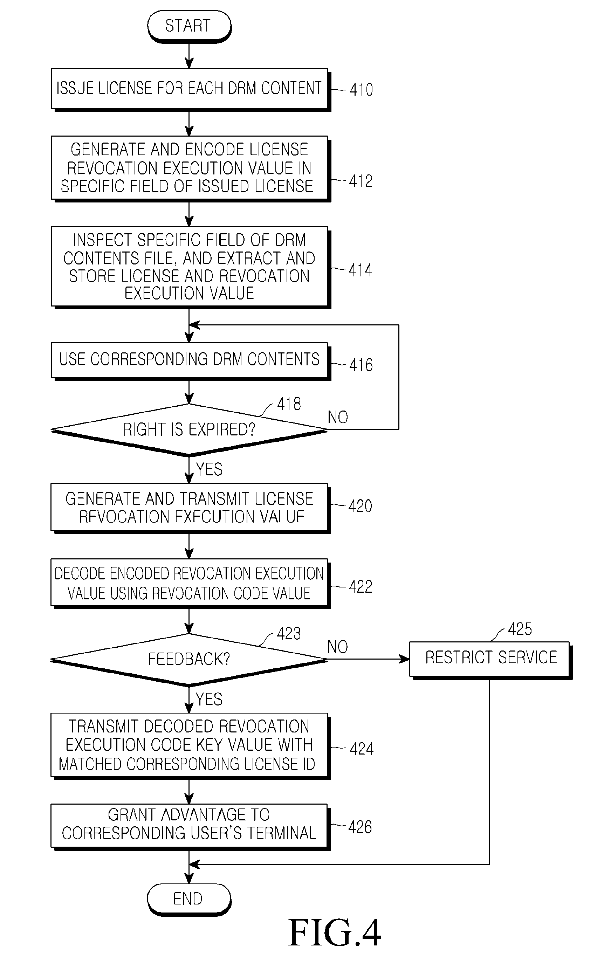

Hereinafter, the DRM content management method by using the DRM content management system according to the exemplary embodiment of the present invention will be described with reference to FIG. 4 in detail.

FIG. 4 is a flowchart illustrating the DRM content management method according to the present invention.

First, a DRM content service providing server issues a license serving as a usage authority for each DRM content file provided from a DRM content providing server and the DRM content providing server includes the issued license in a specific field of the corresponding DRM content file in step 410.

Here, the license clearly indicates a corresponding license identifier (ID), the right for the use of the corresponding DRM content file, a contract condition, a valid usage term, etc.

Then, in step 412, the DRM content providing server generates a revocation execution value necessary for the revocation of the license in a specific field of the issued license and encrypts the generated revocation execution value, to transmit the encrypted revocation execution value to the multiple user terminals.

That is, the DRM content service providing server issues the license serving as a usage authority for each DRM content file provided from the DRM content providing server, includes the issued license in a header area of the DRM content file, generates a revocation execution value of the corresponding license in a specific field of the issued license, and encrypts the generated revocation execution value.

Here, the encryption of the license revocation execution value of the DRM content file is performed according to an encryption condition set by the DRM content service providing server.

In step 414, the user terminal receiving the DRM content file from the DRM content service providing server inspects the specific field, i.e. the header area, of the received DRM content file, extracts the license and a license revocation execution value included in the header area, and stores the extracted license and license revocation execution value in a memory. Then, the user terminal uses the corresponding DRM content file according to information indicated in the license in step 416.

At this time, when the digital right of the DRM content file expires in step 418, the content providing server notifies the DRM content service providing server of the expiration of the DRM content file, and the DRM content service providing server matches a license ID for each of the DRM content files corresponding to the expired digital right with a revocation execution code key value, which can decrypt the revocation execution value generated and encrypted during the issuance of the license, registers the matched license ID and revocation execution code key value in a license revocation list, and then transmits the license revocation list to the corresponding user terminal that has received the digital right-expired DRM content file in step 420.

After the performance of step 420, the DRM content service providing server checks and recognizes if the user terminal has accepted or refused the license revocation of the corresponding DRM content file through feedback transmission from the user terminal with respect to the transmitted revocation request list in step 423.

First, when the user terminal refuses the license revocation of the corresponding DRM content file, the DRM content service providing server has received no feedback from the user terminal within a predetermined time period after step 420, in which the DRM content service providing server transmits the license revocation request list to the user terminal, and thus the corresponding user terminal has not decrypt the encrypted license revocation execution value to a revocation code value. Therefore, in this case, the DRM content service providing server restricts the service of the corresponding DRM content file in step 425.

In contrast, when the user terminal accepts the license revocation of the corresponding DRM content file, the user terminal compares a license ID registered in the license revocation request list with a license ID stored in a memory. After the comparison, when the license ID registered in the license revocation request list is included in the license ID stored in the memory, the user terminal extracts a license revocation execution value of the corresponding DRM content file stored in the memory and decrypts the extracted license revocation execution value by using the revocation execution code key value registered in the license revocation request list in step 422.

Then, the user terminal transmits a revocation code value serving as decryption result information, to the DRM content service providing server, together with the corresponding license ID in step 424.

As a result of the check in step 421, when the DRM content service providing server has received the feedback from the user terminal, the service providing server recognizes that the license has been revoked through the license ID and the revocation code value of the license ID transmitted from the user terminal, transmits the recognized license revocation to the DRM content providing server, and notifies the retrieval of the license of the corresponding DRM content file. Consequently, the DRM content providing server grants advantage, such as recall, refund, or usage term extension, for the retrieved license in step 426.

In the meantime, according to another embodiment of the present invention, the checking of the digital right expiration performed in step 418 can be performed through directly and periodically checking the license of the currently used corresponding DRM content file by the user' terminal, not through the DRM content service providing server from the DRM content providing server. When the usage authority of the license has expired as a result of the check, the user terminal transmits a re-issuance request message for the license of the corresponding DRM content file to the DRM content service providing server. Then, after identically performing steps 420 through 426, the DRM content service providing server re-issues the license of the DRM content file, of which the corresponding license has been retrieved.

According to the present invention, through providing the encrypted/decrypted key of the keys included in the license of the DRM content file, the present invention can induce the revocation of the previously issued license having the expired usage authority, and confirms the license revocation, so that it is possible to efficiently manage the DRM content. Further, the present invention can grant the advantage, such as refund and usage term extension, for the corresponding DRM content of the revoked license, so that the present invention can provide the DRM content purchaser with the reliable service.

Further, when the corresponding license of the DRM content is attacked from a malicious user so that the inappropriate operation, such as the indiscreet issuance of the corresponding license is incurred, the present invention can retrieve the pre-issued license, so that it is possible to efficiently and stably provide the DRM content service.

Through the above description, it is possible to implement the system and the method for the DRM content management. While the present invention has been shown and described with reference to certain exemplary embodiments and drawings thereof, it will be understood by those skilled in the art that various changes in form and details may be made therein without departing from the spirit and scope of the invention as defined by the appended claims.

Note that the above-described methods according to the present invention can be realized in hardware or as software or computer code that can be stored in a recording medium such as a CD ROM, an RAM, a floppy disk, a hard disk, or a magneto-optical disk or downloaded over a network, so that the methods described herein can be executed by such software using a general purpose computer, or a special processor or in programmable or dedicated hardware, such as an ASIC or FPGA. As would be understood in the art, the computer, the processor or the programmable hardware include memory components, e.g., RAM, ROM, Flash, etc. that may store or receive software or computer code that when accessed and executed by the computer, processor or hardware implement the processing methods described herein.

## Claims

1. A system for managing a Digital Rights Management (DRM), **characterized by**:
a content providing server (110) for providing a plurality of DRM contents;
a service providing server (112) for issuing a license serving as a usage authority for each of DRM content files provided from the content providing server, generating a license revocation execution value in a specific field of the issued license, encrypting the generated license revocation execution value; and
a user terminal (120) for inspecting the license of the DRM content file transmitted from the service providing server(112), and extracting and storing the license and the encrypted license revocation execution value to use a corresponding DRM content file, and upon receiving a revocation request, transmitting a revocation result of the corresponding license to the service providing server (112).

2. The system as claimed in claim 1, wherein when the usage authority of the DRM content file has expired, the service providing server (112) transmits a license revocation request list to the user terminal (120) to revoke the license issued for the corresponding DRM content file, the license revocation request list including a license ID for each of the DRM content files corresponding to the expired usage authority with a revocation execution code key value for decrypting the encrypted generated revocation execution value.

3. The system as claimed in claim 1, wherein the revocation result of the corresponding license of the user terminal (120) corresponds to one of (1) between decrypting of the encrypted licensed revocation execution value of the DRM content file using a revocation execution code key value provided in a revocation license list received from the service providing server (112), and in response, transmitting the revocation code value serving as decryption result information together with the corresponding revoked license ID, and refusing a license revocation for the corresponding DRM content file.

4. The system as claimed in claim 1, wherein upon receipt of the revocation result from the service providing server, granting, by the content providing server (110), an advantage of recall, refund, or usage term extension for the DRM content file corresponding to the revoked license.

5. The system as claimed in claim 1, wherein the user terminal (120) periodically checks a corresponding license of each of the DRM content file, and when the usage authority of the DRM content file has expired as a result of the check, the user terminal (120) transmits a license re-issuance request message of the corresponding DRM content file to the service providing server(112).

6. The system as claimed in claim 1, wherein upon receiving a license re-issuance request message of specific DRM content file from the user terminal(120), the service providing server (112)transmitting a corresponding license ID and a revocation execution code key value to the user terminal (120) to re-issues the license of the specific DRM content file.

7. A method for managing a DRM content, the method comprising:
registering, by a content providing server (110), a DRM content and a digital right of the DRM content;
issuing, by a service providing server (112), a license serving as a usage authority for each of DRM content files, generating a license revocation execution value in a specific field of the issued license, encryption the generated license revocation execution value, and transmitting the encrypted license revocation execution value;
inspecting, by a terminal (120), a transmitted DRM content file, and extracting and storing the license and the encrypted license revocation execution value;
when the usage authority of the DRM content file has expired, generating and transmitting a license revocation request list including a license ID of a corresponding DRM content file matched with a license revocation execution code value; and
decrypting the encrypted license revocation execution value of the corresponding DRM content file by using the revocation code value obtained through the received license revocation request list, and transmitting a revocation execution code key value serving as decryption result information.

8. The method as claimed in claim 7, further comprising granting an advantage of recall, refund, or usage term extension for the corresponding DRM content file to the user terminal (120) that has transmitted the decryption result information.

9. The method as claimed in claim 7, further comprising:
periodically checking, by the terminal, a corresponding license of each of the DRM content files, and when a usage authority of the DRM content file has expired as a result of the checking, transmitting a license re-issuance request message of corresponding DRM content file to the service providing server(112); and
when the service providing server (112) has received the license re-issuance request message for specific DRM content file, transmitting a corresponding license ID and another revocation code value to the terminal (120) through the license revocation request list and re-issuing the license of the specific DRM content file.
